(19) Europäisches Patentamt
European Patent Office
Office européen des brevets

(11) Veröffentlichungsnummer: **0 144 966**
**B1**

# (12) EUROPÄISCHE PATENTSCHRIFT

(45) Veröffentlichungstag der Patentschrift: **29.10.86**

(51) Int. Cl.⁴: **C 08 G 65/48**, C 08 G 75/23

(21) Anmeldenummer: **84114756.4**

(22) Anmeldetag: **04.12.84**

(54) **Substituierte aromatische Polyether, deren Herstellung und Verwendung.**

(30) Priorität: **06.12.83 DE 3343958**

(43) Veröffentlichungstag der Anmeldung:
**19.06.85 Patentblatt 85/25**

(45) Bekanntmachung des Hinweises auf die Patenterteilung:
**29.10.86 Patentblatt 86/44**

(84) Benannte Vertragsstaaten:
**BE CH DE FR GB IT LI NL**

(56) Entgegenhaltungen:
**AU - A - 449 867**

(73) Patentinhaber: **BASF Aktiengesellschaft, Carl-Bosch-Strasse 38, D-6700 Ludwigshafen (DE)**

(72) Erfinder: **Blinne, Gerd, Dr., Im Woogtal 7, D-6719 Bobenheim (DE)**
Erfinder: **Hub, Hans-Henning, Dr., Herrnsheimer Hauptstrasse 127a, D-6520 Worms (DE)**
Erfinder: **Aydin, Oral, Dr., Sophienstrasse 14, D-6800 Mannheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

## Beschreibung

Polyether, die aufgebaut sind aus Einheiten, die sich von Bis-(4-halogen)-phenylsulfon sowie Bis-(4-hydroxy)-sulfon oder Bis-(4-hydroxyphenyl)-propan-2,2 ableiten sind aus der DE-B-1545806 bekannt. Solche Polymeren wurden auch schon an den Arylenresten mit Seitenketten wie Sulfonsäureresten oder Phosphor enthaltenden Resten versehen, wie aus der EP-A3 8894 und der US-A-3 748 306 bekannt ist. Diese Polymeren erfüllen noch nicht alle an sie gestellten Anforderungen. Sie sind z.B. hinsichtlich der Einfärbbarkeit und des Haftvermögens verbesserungsbedürftig.

Es war deshalb die technische Aufgabe gestellt, Polyether zur Verfügung zu stellen, die ein verbessertes Haftvermögen und eine gute Einfärbbarkeit haben.

Diese Aufgabe wird gelöst durch substituierte aromatische Polyether, die aufgebaut sind aus wiederkehrenden Einheiten der allgemeinen Formel:

$$-E_1-O-E_2-O- \qquad (I,)$$

in der $E_1$ einen rest bezeichnet, der sich von Bis-(4-halogenphenyl)-sulfon ableitet, und $E_2$ einen Rest bedeutet, der sich von Bis-(4-hydroxyphenyl)-sulfon und/oder Bis-(4-hydroxyphenyl)-propan-2,2 ableitet, und die über die Polymerkette verteilt an den Arylenresten Substituenten der Formel $-COR$ haben, in der R einen aliphatischen Rest mit 2 bis 12 Kohlenstoffatomen bezeichnet, der gesättigt sein kann, eine olefinische Doppelbindung und/oder eine Carboxylgruppe enthalten kann, oder einen Phenylrest bezeichnet, der eine Carboxylgruppe als Substituenten haben kann.

Ferner ist Gegenstand der Erfindung ein Verfahren zur Herstellung von substituierten aromatischen Polyethern, die im Verlauf der Polymerkette an den Arylenresten über Carbonylgruppen gebundene aliphatische oder aromatische Reste enthalten, bei dem man Polyether, die aufgebaut sind aus Resten, die sich von Bis-(4-halogenphenyl)-sulfon sowie Bis-(4-hydroxyphenyl)-sulfon und/oder Bis-(4-hydroxyphenyl)-propan-2,2 ableiten, mit aliphatischen oder Benzolmono- oder -dicarbonsäuren, deren Anhydriden oder Carbonsäurehalogeniden in Gegenwart von Lewis-Säuren und/oder starken Bronstedt-Säuren unter Mitverwendung von unter Reaktionsbedingungen inerten Lösungsmitteln bei einer Temperatur von 20 bis 100°C umsetzt.

Ferner ist ein Gegenstand der Erfindung die Verwendung der vorgenannten substituierten aromatischen Polyether als Haftvermittler.

Die neuen substituierten aromatischen Polyether zeichnen sich durch verbesserte Einfärbbarkeit und Haftung an Oberflächen wie Fasern oder Füllmitteln aus und eignen sich auch als Schmelzkleber. Das neue Verfahren hat den Vorteil, dass es auf einfache Weise gelingt, solche substituierten aromatischen Polyether herzustellen.

Die erfindungsgemässen substituierten aromatischen Polyether sind aufgebaut aus wiederkehrenden Einheiten der allgemeinen Formel I:

$$-E_1-O-E_2-O- \qquad (I,)$$

in der $E_1$ einen Rest bezeichnet, der sich von Bis-(4-halogenphenyl)-sulfon ableitet und $E_2$ einen Rest bedeutet, der sich von Bis-(4-hydroxyphenyl)-sulfon und/oder Bis-(4-hydroxyphenyl)-propan-2,2 ableitet und die über die Polymerkette verteilt an den Arylenresten Substituenten der Formel $-COR$ haben, in der R einen aliphatischen Rest mit 2 bis 12 Kohlenstoffatomen bezeichnet, der gesättigt sein kann, eine olefinische Doppelbindung und/oder eine Carboxylgruppe enthalten kann, oder für einen Phenylrest steht, der eine Carboxylgruppe als Substituenten haben kann.

In bevorzugten Polyethern mit Substituenten der Formel $-COR$ bezeichnet R einen Alkylrest mit 2 bis 6 Kohlenstoffatomen, einen Alkenylrest mit 2 bis 6 Kohlenstoffatomen, die jeweils eine Carboxylgruppe enthalten, oder einen Phenylrest, der eine Carboxylgruppe enthält. Vorteilhaft enthalten die aromatischen Polyether auf 100 Arylenrest 1 bis 100 Substituenten, insbesondere 5 bis 40 Substituenten.

Bei dem erfindungsgemässen Verfahren geht man von Polyethern aus, die aufgebaut sind aus Resten, die sich von Bis-(4-halogenphenyl)-sulfon sowie Bis-(4-hydroxyphenyl)-sulfon und/oder Bis-(4-hydroxyphenyl)-propan-2,2 ableiten. Geeignete Polymere erhält man z.B. durch Umsetzen von Bis-(4-chlorphenyl)-sulfon mit Bis-(4-hydroxyphenyl)-sulfon oder Bis-(4-hydroxyphenyl)-propan-2,2 unter Mitverwendung von Alkalicarbonat in eines aprotischen Lösungsmittel, z.B. N-Methylpyrrolidon, bei einer Temperatur von 180 bis 300°C. Nach Erreichen des gewünschten Polykondensationsgrades wird die Reaktion durch Zugabe von Methylchlorid abgebrochen und das Polymere durch Zugabe von Wasser ausgefällt oder nach Abtrennen von Alkalichlorid das Lösungsmittel durch Verdampfen entfernt. Geeignete Herstellungsverfahren werden z.B. beschrieben in der DE-B-2533110. Bevorzugte Polyether haben einen Polykondensationsgrad n von 40 bis 150, insbesondere von 60 bis 120.

Die Polyether werden mit aliphatischen oder Benzolmono- oder-dicarbonsäuren, deren Anhydriden oder Carbonsäurehalogeniden umgesetzt. Bevorzugt verwendet man Alkan- oder Alkenmonocarbonsäuren, deren Anhydride oder Halogenide mit 2 bis 12, insbesondere 2 bis 6 Kohlenstoffatomen. Bevorzugte Dicarbonsäuren, deren Anhydride oder Halogenide haen 2 bis 6 Kohlenstoffatome, wobei die Kohlenstoffkette gesättigt ist oder eine olefinische Doppelbindung enthalten kann. Besonders bevorzugt verwendet man Alkan- oder Alkendicarbonsäuren, deren Anhydride oder Halogenide, ferner Benzoldicarbonsäuren, deren Anhydride oder Halogenide. Geeignete Verbindungen sind beispielsweise Phthalsäureanhydrid, Maleinsäureanhydrid, Bernsteinsäureanhydrid, Terephthalsäure, Acrylsäurechlorid, Essigsäureanhydrid oder Terephthaloylchlorid.

Je 100 Arylenreste in den Ausgangspolyethern wendet man in der Regel 1 bis 100 Mol, insbesondere 5 bis 40 Mol, Mono- oder Dicarbonsäuren der vorgenannten Art an.

Die Umsetzung wird in Gegenwart von Lewis-Säuren und/oder starken Bronstedt-Säuren durchgeführt. Geeignete Lewis-Säuren sind beispielsweise Aluminiumchlorid, Eisenchlorid, Borfluorid, Borfluoridetherat oder Titantetrachlorid. Geeignete Bronstedt-Säuren sind beispielsweise Schwefelsäure, Perchlorsäure, Perbromsäure oder Trifluormethansulfonsäure. Besonders bevorzugt wird Aluminiumchlorid, Bortrifluoridetherat oder Trifluormethansulfonsäure verwendet. In der Regel wendet man je Mol Mono- oder Dicarbonsäure 1 bis 2,2 Mol Lewis-Säure oder 0,01 bis 1 Mol Bronstedt-Säuren an.

Die Umsetzung wird bei einer Temperatur von 20 bis 100°C durchgeführt. Vorteilhaft hält man eine Temperatur von 50 bis 90°C ein.

Ferner führt man die Umsetzung unter Mitverwendung von unter Reaktionsbedingungen inerten Lösungsmitteln durch. Geeignete Lösungsmittel sind beispielsweise Chlorkohlenwasserstoffe wie 1,2-Dichlorethan, Dichlorbenzol, Trichlorbenzol oder 1,1,2-Trichlorethan, ferner Nitrobenzol.

Das Verfahren nach der Erfindung führt man vorteilhaft durch, indem man Polyether in einem, geeigneten Lösungsmittel löst, Mono- oder Dicarbonsäuren der aufgeführten Art zugibt, auf Reaktionstemperatur erwärmt und die Bronstedt-Säure oder Lewis-Säure portionsweise einträgt. Die Reaktion ist in der Regel nach 1 bis 6 Stunden beendet. Vorteilhaft setzt man nach beendeter Reaktion ein aprotisches Lösungsmittel, z.B. N-Methylpyrrolidon, zu und destilliert die Chlorkohlenwasserstoffe ab. Anschliessend wird das Polymere durch Fällen in Wasser oder Methanol gewonnen.

Die erfindungsgemässen substituierten aromatischen Polyether eignen sich zur Herstellung von Formkörpern, Schmelzklebern oder Haftverbesserungsmitteln auf Fasern oder Füllstoffen.

Die Erfindung sei an folgenden Beispielen veranschaulicht.

*Beispiele 1 bis 9*

50 g eines Polysulfons, hergestellt aus Bis-(4-chlorphenyl)-sulfon und Bisphenol A mit einem Kondensationsgrad von 60, werden in 600 ml Dichlorethan bei 60°C gelöst und die als Substitutionsmittel verwendeten Säuren, Säureanhydride oder Carbonsäurechloride zugegeben. Anschliessend wird 20 g Aluminiumchlorid portionsweise zugegeben und 3 Stunden bei 60°C gerührt. Dann lässt man 300 ml N-Methylpyrrolidon zulaufen und destilliert Dichlorethan ab. Anschliessend wird die Lösung in Wasser gegossen und das ausgefällte substituierte Polymere durch Filtration isoliert und getrocknet. Die näheren Einzelheiten sind aus folgender Tabelle 1 zu entnehmen.

*Beispiele 10 und 11*

Man verfährt wie in Beispiel 1 beschrieben, verwendet jedoch anstatt Aluminiumchlorid 0,5 ml Trifluormethansulfonsäure. Die Einzelheiten sind aus Tabelle 1 zu entnehmen.

*Tabelle 1*

| Beispiel | Substitutionsmittel | Menge (g) | Glastemperatur (T [°C]) | Säurezahl | K-Wert |
|---|---|---|---|---|---|
| 1 | Phthalsäureanhydrid | 7,5 | 183 | 7 | 33,4 |
| 2 | Phthalsäureanhydrid | 4,0 | 163 | 2 | 41,8 |
| 3 | Maleinsäureanhydrid | 5,0 | 180 | 12 | 25,9 |
| 4 | Maleinsäureanhydrid | 7,5 | 150 | 58 | 16,5 |
| 5 | Bernsteinsäureanhydrid | 2,6 | 180 | 1 | 45,2 |
| 6 | Bernsteinsäureanhydrid | 5,2 | 167 | 1 | 34,6 |
| 7 | Bernsteinsäureanhydrid | 10,2 | 83 | 60 | 21,1 |
| 8 | Terephthalsäuredichlorid | 10,3 | 175 | 0,7 | 41,2 |
| 9 | Acrylsäure | 3,6 | 169 | 4 | 45,6 |
| 10 | Bernsteinsäureanhydrid | 6,0 | 184 | 0,9 | 53,0 |
| 11 | Maleinsäureanhydrid | 6,0 | 182 | 9,7 | 52,2 |
| K-Wert gemessen: 0,5 g in 100 ml N-Methylpyrrolidon-2 bei 130°C | | | | | |

Zur Beurteilung des Haftvermögens der erfindungsgemässen Polyether wurden die in den Beispielen 1, 10 und 11 hergestellten Polymeren in ihren Eigenschaften als Schmelzkleber zum Vergleich mit einem Seitengruppenfreien Polysulfon, hergestellt aus Bis-(4-chlorphenyl)-sulfon und Bis-phenol A mit einem Kondensationsgrad von 60 untersucht.

Dazu wurden aus den Polyethern 0,5 mm dicke Filme mit der Abmessung 1 × 1 cm hergestellt und bei 300°C auf gereinigte Stahlbleche kaschiert. Nach dem Schmelzen der Folien wurde ein Verbund mit einem vorgeheizten Stahlblech unter 500 g Belastung hergestellt und abgekühlt. Sodann wurden die Trennfestigkeiten der so hergestellten Verbunde ermittelt. Tabelle 2 enthält die Trennkraft in kg auf 1 × 1 cm Verbund für die untersuchten Polymere.

*Tabelle 2*

| Polymeres | Trennkraft (kg) |
|---|---|
| Polysulfon | 94 |
| Beispiel 1 | 130 |
| Beispiel 10 | 200 |
| Beispiel 11 | 200 |

*Beispiele 12 bis 14*

50 g eines Polymeren, hergestellt aus Bis-(4-chlorphenyl)-sulfon und Bis-(4-hydroxyphenyl)-sulfon werden in 600 ml Dichlorethan bei 60°C gelöst und die in der Tabelle aufgeführte Menge an Säuren zugegeben. Anschliessend werden 20 g Aluminiumchlorid portionsweise zugegeben und 3 Stunden bei 60°C gerührt. Nach beendeter Reaktion lässt man 300 ml N-Methylpyrrolidon zulaufen und destilliert Dichlorethan ab. Der substituierte Polymere wird durch Eingiessen in Wasser ausgefällt, filtriert und getrocknet. Die näheren Einzelheiten sind aus folgender Tabelle 2 zu entnehmen.

*Tabelle 2*

| Beispiel | Substitutionsmittel | Menge (g) | Glastemperatur (T [°C]) | Säurezahl | K-Wert |
|---|---|---|---|---|---|
| 12 | Maleinsäureanhydrid | 2,5 | 216 | 1,1 | 42,2 |
| 13 | Essigsäureanhydrid | 5,2 | 135 | 0 | 36,7 |
| 14 | Maleinsäureanhydrid | 5,0 | 220 | 4,8 | 42,1 |
| K-Wert ermittelt gemäss Tabelle 1 | | | | | |

**Patentansprüche**

1. Substituierte aromatische Polyether, die aufgebaut sind aus wiederkehrenden Einheiten der allgemeinen Formel I:

$$-E_1-O-E_2-O- \qquad (I,)$$

in der $E_1$ einen Rest bezeichnet, der sich von Bis-(4-halogenphenyl)-sulfon ableitet und $E_2$ einen Rest bedeutet, der sich von Bis-(4-hydroxyphenyl)-sulfon und/oder Bis-(4-hydroxyphenyl)-propan-2,2-ableitet und die über die Polymerkette verteilt an den Arylenresten Substituenten der Formel $-COR$ haben, in der R einen aliphatischen Rest mit 2 bis 12 Kohlenstoffatomen bedeutet, der gesättigt sein kann, eine olefinische Doppelbindung enthalten kann und/oder eine Carboxylgruppe enthalten kann oder einen Phenylrest, der eine Carboxylgruppe enthalten kann, bedeutet.

2. Polyether nach Anspruch 1, dadurch gekennzeichnet, das sie je 100 Arylenresten 1 bis 100 Substituenten $-COR$, in der R die vorgenannte Bedeutung hat, enthalten.

3. Polyether nach den Ansprüchen 1 und 2, dadurch gekennzeichnet, dass die Substituenten Carbonsäuregruppen enthalten.

4. Verfahren zur Herstellung von substituierten aromatischen Polyethern, die im Verlauf der Polymerkette an den Arylenresten über Carbonylgruppen gebundene aliphatische oder aromatische Reste enthalten, dadurch gekennzeichnet, dass man Polyether, die aufgebaut sind aus Resten, die sich von Bis-(4-halogenphenyl)-sulfon sowie Bis-(4-hydroxyphenyl)-sulfon und/oder Bis-(4-hydroxyphenyl)-propan-2,2 ableiten, mit aliphatischen oder Benzolmono- oder -dicarbonsäuren, deren Anhydriden oder Carbonsäurehalogeniden in Gegenwart von Lewis-Säuren und/oder starken Bronstedt-Säuren unter Mitverwendung von unter Reaktionsbedingungen inerten Lösungsmitteln bei einer Temperatur von 20 bis 100°C umsetzt.

5. Verfahren nach Anspruch 4, dadurch gekennzeichnet, dass man auf je 100 Arylenreste in der Polymerkette 1 bis 100 Mol aliphatische oder Benzolmono- oder -dicarbonsäuren, deren Anhydride oder Carbonsäurehalogenide einsetzt.

6. Verfahren nach den Ansprüchen 4 und 5, dadurch gekennzeichnet, dass man Alkan- oder Alkendicarbonsäuren mit 2 bis 12 Kohlenstoffatomen oder Benzoldicarbonsäuren oder deren Anhydride verwendet.

7. Verfahren nach den Ansprüchen 4 bis 6, dadurch gekennzeichnet, dass man eine Temperatur von 50 bis 90°C einhält.

8. Verfahren nach den Ansprüchen 4 bis 7, dadurch gekennzeichnet, dass man als inertes Lösungsmittel 1,2-Dichlorethan verwendet.

9. Verwendung von Polyethern nach Anspruch 1 als Haftvermittler.

**Claims**

1. A substituted aromatic polyether which is composed of recurring units of the general formula I:

$$-E_1-O-E_2-O- \qquad (I,)$$

where $E_1$ is a radical that is derived from bis-(4-halophenyl)-sulfone, and $E_2$ is a radical that is derived from bis-(4-hydroxyphenyl)-sulfone and/or bis-(hydroxyphenyl)-2,2-propane, and which has, distributed along the polymer chain, on the

arylene radicals, substituents of the formula $-COR$, where R is an aliphatic radical of 2 to 12 carbon atoms which may be saturated and may contain an olefinic double bond and/or a carboxyl group, or is phenyl which may contain a carboxyl group.

2. A polyether as claimed in claim 1, which contains from 1 to 100 substituents $-COR$, where R has the above meanings, per 100 arylene radicals.

3. A polyether as claimed in claims 1 and 2, wherein the substituents contain carboxylic acid groups.

4. A process for the preparation of a substituted aromatic polyether which has, along the polymer chain, aliphatic or aromatic radicals which are attached to the arylene radicals via carbonyl groups, wherein a polyether which is composed of radicals derived from bis-(4-halophenyl)-sulfone and bis-(4-hydroxyphenyl)-sulfone and/or bis-(4-hydroxyphenyl)-2,2-propane is reacted, at a temperature of from 20 to 100°C, with an aliphatic monocarboxylic or dicarboxylic acid or a benzenemonocarboxylic or benzenedicarboxylic acid, or an anhydride thereof or a carboxylic acid halide in the presence of a Lewis acid and/or a strong Bronstedt acid and in the presence of a solvent which is inert under the reaction conditions.

5. A process as claimed in claim 4, wherein from 1 to 100 moles of an aliphatic monocarboxylic or dicarboxylic acid or a benzenemonocarboxylic or benzenedicarboxylic acid, or an anhydride thereof or a carboxylic acid halide are used per 100 arylene radicals in the polymer chain.

6. A process as claimed in claims 4 and 5, wherein an alkane- or alkenedicarboxylic acid of 2 to 12 carbon atoms or a benzenedicarboxylic acid or an anhydride thereof is used.

7. A process as claimed in claims 4 to 6, wherein a temperature of 50 to 90°C is maintained.

8. A process as claimed in claims 4 to 7, wherein 1,2-dichloroethane is used as inert solvent.

9. The use of a polyether as claimed in claim 1 as adhesion promotor.

## Revendications

1. Polyéthers aromatiques substitués, constitués d'unités récurrentes de la formule générale I:

$$-E_1-O-E_2-O- \qquad (I,)$$

dans laquelle $E_1$ désigne un groupe dérivé d'une bis-(4-halo-phényl)-sulfone et $E_2$ un groupe dérivé de la bis-(4-hydroxy-phényl)-sulfone et(ou) du bis-(4-hydroxy-phényl)-propane-2,2, et qui portent sur les groupes arylène des substituants de la formule $-COR$ répartis le long de la chaîne polymère, R désignant un groupe aliphatique en $C_2$ à $C_{12}$, pouvant être saturé ou comporter une double liaison oléfinique et(ou) contenir un groupe carboxyle, ou un groupe phényle contenant éventuellement un groupe carboxyle.

2. Polyéthers suivant la revendication 1, caractérisés en ce que, pour 100 groupes arylène, ils portent 1 à 100 substituants $-COR$, où R possède la signification définie.

3. Polyéthers suivant les revendications 1 et 2, caractérisés en ce que les substituants comprennent des groupes acide carboxylique.

4. Procédé de préparation de polyéthers aromatiques substitués, comportant des groupes aliphatiques ou aromatiques reliés par des groupes carbonyle aux groupes arylène et répartis le long de la chaîne polymère, caractérisés en ce que l'on fait réagir à une température comprise entre 20 et 100°C, dans un solvant inerte dans les conditions réactionnelles et en présence d'acides de Lewis et(ou) d'acides de Bronstedt forts, des polyéthers constitués de groupes dérivés d'une bis-(4-halo-phényl)-sulfone et de la bis-(4-hydroxy-phényl)-sulfone et(ou) du bis-(4-hydroxy-phényl)-propane-2,2 avec des acides mono- ou di-carboxyliques aliphatiques ou des acides benzène-mono- ou -dicarboxyliques ou des anhydrides de ces acides ou des halogénures d'acides carboxyliques.

5. Procédé suivant la revendication 4, caractérisé en ce que, pour 100 groupes arylène dans la chaîne polymère, on met en œuvre entre 1 et 100 moles d'acides mono- ou di-carboxyliques aliphatiques ou d'acides benzène-mono- ou -dicarboxyliques ou d'anhydrides de ceux-ci ou d'halogénures d'acides carboxyliques.

6. Procédé suivant les revendications 4 et 5, caractérisé en ce que l'on emploie des acides alcane- ou alcène-dicarboxyliques en $C_2$ à $C_{12}$ ou des acides benzène-dicarboxyliques ou leurs anhydrides.

7. Procédé suivant les revendications 4 à 6, caractérisé en ce que la température est réglée entre 50 et 90°C.

8. Procédé suivant les revendications 4 à 7, caractérisé en ce que l'on emploie comme solvant inerte le dichloro-1,2 éthane.

9. Utilisation de polyéthers suivant la revendication 1 comme matières adhésives.